# EUROPÄISCHE PATENTSCHRIFT

(11) **EP 0 986 882 B1**
(45) Veröffentlichungstag und Bekanntmachung des Hinweises auf die Patenterteilung: **23.07.2003**
(21) Anmeldenummer: 98930649.3
(22) Anmeldetag: 28.05.1998
(51) Int. Cl.: H04L 25/02, H04L 25/03, H04B 7/005

(54) **ZEIT-VARIABLES ANPASSUNGSVERFAHREN UND ANORDNUNG EINES DATENEMPFÄNGERS**
TIME VARIABLE ADAPTATION METHOD AND DATA RECEIVER
PROCEDE D'ADAPTATION VARIANT DANS LE TEMPS ET DISPOSITIF DE RECEPTION DE DONNEES

(30) Priorität: 06.06.1997 DE 19724027
(43) Veröffentlichungstag der Anmeldung: 22.03.2000
(73) Patentinhaber: SIEMENS AKTIENGESELLSCHAFT, 80333 München (DE)
(72) Erfinder: KLEIN, Anja, D-80999 München (DE); NASSHAN, Markus, D-46395 Bocholt (DE); PILLEKAMP, Klaus-Dieter, D-40699 Erkrath (DE)
(86) Internationale Anmeldenummer: DE9801473
(87) Internationale Veröffentlichungsnummer: WO98056146

(56) Entgegenhaltungen:
- EP-A- 0 532 485
- WO-A-94/18752
- DE-A- 4 102 151
- DE-A- 4 329 317
- GB-A- 2 286 509

## Beschreibung

Die Erfindung bezieht sich auf ein Verfahren zum Empfang von Daten, sowie auf eine Anordnung zur Durchführung des Verfahrens. Der Begriff "Daten" bezieht sich im Rahmen dieser Anmeldung auch auf Sprachdaten.

Bei vielen Nachrichtenübertragungssystemen, insbesondere Mobilfunksystemen, sind die Übertragungskanäle zeitvariant und frequenzselektiv. In Nachrichtenübertragungssystemen mit zeitvarianten und frequenzselektiven Übertragungskanälen geht man bei der Datendetektion im Empfänger üblicherweise folgendermaßen vor:
- Schätzung der Übertragungseigenschaften der Übertragungskanäle. Dies geschieht üblicherweise durch eine Schätzung der Kanalimpulsantworten (Kanalschätzung), worunter man in der Regel die Schätzung des Betrags und der Phase der Kanalimpulsantworten der Übertragungskanäle versteht. Es sind aber auch Detektionsarten bekannt, die zur Ermittlung der Übertragungseigenschaften der Übertragungskanäle nur den Betrag der Kanalimpulsantworten schätzen.
- Anpassung des Empfängers an die aktuellen (geschätzten) Übertragungseigenschaften bzw. Kanalimpulsantworten, wodurch das Wissen über die Übertragungseigenschaften der Übertragungskanäle bei der Datendetektion vorteilhaft eingesetzt wird.

Obwohl es für eine Kommunikationsverbindung und den zugehörigen Übertragungskanal in der Regel immer nur eine aktuelle Kanalimpulsantwort gibt, wird in der vorliegenden Beschreibung immer von einer Schätzung mehrerer Kanalimpulsantworten gesprochen, da es neue Detektionsverfahren gibt, die zur Datendetektion die Kanalimpulsantworten mehrerer Kommunikationsverbindungen und den zugehörigen Übertragungskanälen schätzen und diese vorteilhaft zur Datendetektion nützen. Auch gibt es Übertragungsverfahren, bei denen einer Kommunikationsverbindung mehrere unterschiedliche Übertragungskanäle gleichzeitig zugeordnet sind. Auch andere im Zusammenhang mit der Kanalimpulsantwort verwendete Begriffe werden in der Mehrzahl aufgeführt. Dennoch umfaßt die vorliegende Anmeldung auch Detektionsverfahren, bei denen nur immer eine aktuelle Kanalimpulsantwort geschätzt wird.

In bisher bekannten Verfahren werden die Schätzungen der Kanalimpulsantworten in einem bestimmten festen zeitlichen Raster oder sogar fortlaufend durchgeführt. Nach jeder Schätzung der Kanalimpulsantworten wird der Empfänger an die aktuellen Kanalimpulsantworten angepaßt, das heißt sein Wissen über die Übertragungseigenschaften der Übertragungskanäle wird aktualisiert, so daß es bei der Datendetektion vorteilhaft eingesetzt werden kann.

Die Anpassung des Empfängers an die aktuellen Kanalimpulsantworten erfolgt je nach Nachrichtenübertragungssystem unterschiedlich. Im folgenden ist dies kurz anhand einiger Beispiele dargestellt:
- Im GSM werden die Kanalimpulsantworten zur Einstellung der Multiplikatoren bei der Metrikbildung des Viterbi-Detektors verwendet.
- Bei Direct Sequence (DS)-CDMA Mobilfunksystemen wie beispielsweise dem IS-95 wird üblicherweise ein Rake-Empfänger zur Datendetektion eingesetzt. Dabei erfolgt die Anpassung des Empfängers an die aktuellen Kanalimpulsantworten über die Justierung bzw. Einstellung der Rake-Finger.
- In einem Wideband TDMA System (z.B. Bandbreite ca. 2 MHz) mit einem Decision Feedback Equalizer (DFE) werden die Kanalimpulsantworten verwendet, um die Filterkoeffizienten des forward bzw. des feedbackward filters zu berechnen. Zur Berechnung der Filterkoeffizienten des DFE muß mit großem Aufwand ein Gleichungssystem gelöst werden. Das Gleiche gilt für ein Wideband TDMA System mit einem DFSE (Decision Feedback Sequence Equalizer ist eine Kombination von MLSE und DFE).
- Im Empfänger eines JD-CDMA-Systems werden zur Datendetektion mehrere unterschiedliche Verfahrensschritte durchgeführt. Die Anpassung des Empfängers an die aktuellen geschätzten Kanalimpulsantworten erfolgt dabei beispielsweise bei der Verwendung des Zero Forcing Blockentzerrers (ZF-BLE), im wesentlichen in den folgenden 4 Schritten :
   Schritt 1: Für alle Teilnehmer k = 1, ..., K : Faltung der Kanalimpulsantwort h^{(k)} des Teilnehmers k mit den teilnehmerspezifischen CDMA-Codes c^{(k)} wobei das Ergebnis die kombinierte Impulsantwort b^{(k)} ist; pro Teilnehmer kann es auch mehrere Kanalimpulsantworten geben.
   Schritt 2: Bestimmung einer Systemmatrix A basierend auf den kombinierten Impulsantworten b^{(k)} aller K Teilnehmer, k=1, ..., K.
   Schritt 3: Bestimmung der Matrix A^{H}A (das hochgestellte H symbolisiert die Operation "konjugiert komplex transponiert" )
   Schritt 4: Berechnung der Cholesky Zerlegung von A^{H}A

In den Empfängern erfordert die Anpassung des Empfängers an die aktuelle Kanalimpulsantwort in allen oben exemplarisch aufgeführten Fällen großen Aufwand, da zur Durchführung der Anpassung viele Operationen wie Multiplikationen, Additionen oder Datentransfers große Rechenleistung und somit auch großen Stromverbrauch erfordern.

Der Erfindung liegt daher die Aufgabe zugrunde, ein Verfahren und eine Anordnung zur Durchführung des Verfahrens anzugeben, mit denen der Empfang von Daten mit möglichst geringem Aufwand und möglichst guter Qualität durchgeführt werden kann.

Diese Aufgabe wird durch ein Verfahren mit Merkmalen nach Anspruch 1 gelöst.

Bei einer Ausführungsform der Erfindung wird der zeitliche Abstand zwischen den Anpassungen des Empfängers an die aktuellen Kanalimpulsantworten variiert und an die Änderungen der Übertragungseigenschaften der entsprechenden Übertragungskanäle angepaßt.

Wie oben erwähnt, werden in bisher bekannten Verfahren die Schätzungen der Kanalimpulsantworten in einem bestimmten festen zeitlichen Raster oder sogar fortlaufend gemessen. Nach jeder Schätzung der Kanalimpulsantworten wird der Empfänger an die aktuellen Kanalimpulsantworten angepaßt. Diese Anpassung erfolgt demnach üblicherweise auch in einem festen zeitlichen Raster. Beispielsweise verwenden GSM und JD-CDMA Trainingssequenzen (Mittambeln), mit denen die Impulsantworten der Mobilfunkkanäle geschätzt werden. Diese Trainingssequenzen werden für jeden übertragenen Burst gemessen und anschließend wird der Empfänger an die aktuellen Kanalimpulsantworten angepaßt. In konventionellen Direct Sequence (DS)-CDMA Mobilfunksystemen, zum Beispiel IS-95, werden sogenannte Pilot-Signale verwendet, um die Kanaleigenschaften des Mobilfunkkanals zu ermitteln. Diese Pilot-Signale werden dabei sogar fortlaufend gesendet.

Es stellte sich aber bei aufwendigen Simulationen mit eigens für diesen Zweck hergestellten Simulationswerkzeugen heraus, daß in Nachrichtenübertragungssytemen unter bestimmten Bedingungen der Fall auftreten kann, daß sich die Übertragungseigenschaften der Übertragungskanäle und damit die Kanalimpulsantworten langsamer ändern, als es dem oben erwähnten festen zeitlichen Raster entspricht. Das heißt die Übertragungseigenschaften der Übertragungskanäle und damit die Kanalimpulsantworten ändern sich so langsam bzw. so geringfügig, daß es nicht nötig ist, die Anpassung des Empfängers an die aktuellen Kanalimpulsantworten nach jeder Schätzung der Kanalimpulsantworten durchzuführen, die ja nach einem vorgegebenen festen zeitlichen Raster erfolgt. Dieser Fall tritt verstärkt in TDMA-Systemen und somit auch in JD-CDMA- und GSM-Systemen auf, wenn einem Teilnehmer mehrere, aufeinander folgende Zeitschlitze des TDMA-Rahmens zugeteilt werden. Die Anpassung des Empfängers an die aktuelle Kanalimpulsantwort in einem fest vorgegebenen Zeitraster bedeutet in diesen Fällen einen unnötigen Aufwand, der die Datendetektion vergleichsweise nur geringfügig verbessert.

Die Erfindung beruht demnach auf dem Gedanken, je nach Änderung der Übertragungseigenschaften, den zeitlichen Abstand zwischen den Anpassungen des Empfängers an die aktuellen Kanalimpulsantworten so zu variieren, daß mit möglichst geringem Aufwand - das heißt mit möglichst langem zeitlichem Abstand zwischen den Anpassungen des Empfängers an die aktuellen Kanalimpulsantworten - eine möglichst zuverlässige Datendetektion erfolgt.

Der Aufwand kann reduziert werden, indem die zeitlichen Abstände der Anpassungen des Empfängers an die aktuellen Kanalimpulsantworten je nach Stärke der Änderung der Übertragungseigenschaften der entsprechenden Übertragungskanäle variiert wird. Wenn innerhalb bestimmter Zeitschritte eine starke Änderung der Übertragungseigenschaften ermittelt wird, so wird der zeitliche Abstand zwischen den Anpassungen des Empfängers an die aktuellen Kanalimpulsantworten verringert. Wenn innerhalb bestimmter Zeitschritte eine schwache Änderung der Übertragungseigenschaften ermittelt wird, so wird der zeitliche Abstand zwischen den Anpassungen des Empfängers an die aktuellen Kanalimpulsantworten vergrößert. Je schwächer die Änderung der Übertragungseigenschaften, desto größer der zeitliche Abstand zwischen den Anpassungen des Empfängers an die aktuellen Kanalimpulsantworten und umgekehrt.

Es sind dabei unterschiedliche Ausführungsvarianten denkbar, mit denen die Änderungen der Übertragungseigenschaften der entsprechenden Übertragungskanäle ermittelt werden können.

Eine bevorzugte Ausführungsvariante sieht vor, daß der zeitliche Abstand zwischen den Anpassungen des Empfängers an die aktuellen Kanalimpulsantworten an die Änderung bzw. die Stärke der Änderung der entsprechenden Kanalimpulsantworten angepaßt wird.

Eine weitere vorteilhafte Ausführungsvariante sieht vor, daß der zeitliche Abstand zwischen den Anpassungen des Empfängers an die aktuellen Kanalimpulsantworten an die Qualität der über die entsprechenden Übertragungskanäle empfangenen Daten angepaßt wird. Dabei wird von der Qualität der empfangenen Daten auf die Stärke der Änderung der Übertragungseigenschaften der entsprechenden Übertragungskanäle geschlossen und anschließend je nach Stärke der Änderung der Übertragungseigenschaften der entsprechenden Übertragungskanäle der Abstand zwischen den Anpassungen des Empfängers an die aktuellen Kanalimpulsantworten angepaßt. Je besser die Qualität der empfangenen Daten, desto größer der zeitliche Abstand zwischen den Anpassungen des Empfängers an die aktuellen Kanalimpulsantworten und umgekehrt.

In weiterer Ausgestaltung der Erfindung ist vorgesehen, daß eventuell zusätzlich der zeitliche Abstand zwischen den Schätzungen der Kanalimpulsantworten an die Qualität der empfangenen Daten angepaßt wird. Das heißt, je nach Stärke der Änderung der Übertragungseigenschaften der entsprechenden Übertragungskanäle kann, wenn die Übertragungseigenschaften der entsprechenden Übertragungskanäle auf der Basis der Qualität der empfangenen Daten ermittelt werden auch der Abstand zwischen den Schätzungen der Kanalimpulsantworten variiert werden.

Dadurch kann bei langsam veränderlichen Übertragungskanälen der Aufwand und der Stromverbrauch weiter reduziert werden, da auch die Schätzung der Kanalimpulsantworten sehr aufwendig ist.

Bei einer weiteren vorteilhaften Ausführungsvariante wird der zeitliche Abstand zwischen den Anpassungen des Empfängers an die aktuellen Kanalimpulsantworten an im Empfänger ermittelte Meßwerte angepaßt. Diese Meßwerte sind dabei charakteristisch für die Übertragungseigenschaften der entsprechenden Übertragungskanäle.

Ein weiteres vorteilhaftes Ausführungsbeispiel sieht vor, daß eventuell zusätzlich der zeitliche Abstand zwischen den Schätzungen der Kanalimpulsantworten von im Empfänger ermittelten Meßwerten abhängt.

Das heißt, je nach Stärke der Änderung der Übertragungseigenschaften der entsprechenden Übertragungskanäle kann, wenn die Übertragungseigenschaften bzw. die Änderungen der Übertragungseigenschaften der entsprechenden Übertragungskanäle über im Empfänger ermittelte Meßwerte ermittelt wird, auch der Abstand zwischen den Schätzungen der Kanalimpulsantworten variiert werden.

Dadurch kann bei langsam veränderlichen Übertragungskanälen der Aufwand und der Stromverbrauch weiter reduziert werden.

Weiterbildungen der Erfindung ergeben sich aus den Unteransprüchen. Anordnungen zur Durchführung des Verfahrens sind in den Ansprüchen 8 bis 12 angegeben.

Zur Erläuterung von Ausführungsformen der Erfindung dienen die nachstehend aufgelisteten Figuren.

### Es zeigen:

FIG 1 ein schematisches Blockschaltbild eines JD-CDMA Empfängers, bei dem der zeitliche Abstand zwischen den Anpassungen des Empfängers an die aktuellen Kanalimpulsantworten an die Änderung der Kanalimpulsantworten angepaßt wird.
FIG 2 ein schematisches Blockschaltbild eines JD-CDMA Empfängers, bei dem der zeitliche Abstand zwischen den Anpassungen des Empfängers an die aktuellen Kanalimpulsantworten an die Qualität der empfangenen Daten angepaßt wird.

Die Erfindung wird im folgenden anhand bevorzugter Ausführungsbeispiele und mit Hilfe der Figuren näher beschrieben.

Bei einer speziellen Ausführungsform des erfindungsgemäßen Verfahrens erfolgt die Anpassung des Empfängers an die aktuellen Kanalimpulsantworten normalerweise in einem festen Raster, aber immer dann, wenn sich die Übertragungseigenschaften der Übertragungskanäle nicht oder nur vernachlässigbar verändern, wird die Anpassung des Empfängers an die aktuellen Kanalimpulsantworten nicht durchgeführt. Dadurch kann der Rechenaufwand und der Stromverbrauch im Empfänger beträchtlich gesenkt werden.

Voteilhafterweise kann die Änderung der Übertragungseigenschaften dadurch ermittelt werden, daß die neu gemessenen Übertragungseigenschaften mit den vorher gemessenen Eigenschaften verglichen werden.

Dazu kann eine geeignete Metrik gebildet werden, die ein Maß dafür ist, wie stark sich die Übertragungskanäle geändert haben. Der Wert der Metrik ist um so größer, je stärker oder größer die Änderung der Übertragungseigenschaften der Übertragungskanäle ist. Ist der Wert der Metrik größer, erfolgt die Anpassung des Empfängers an die aktuellen Kanalimpulsantworten. Ist der Wert der Metrik kleiner als eine bestimmte Schwelle, erfolgt die Anpassung nicht.

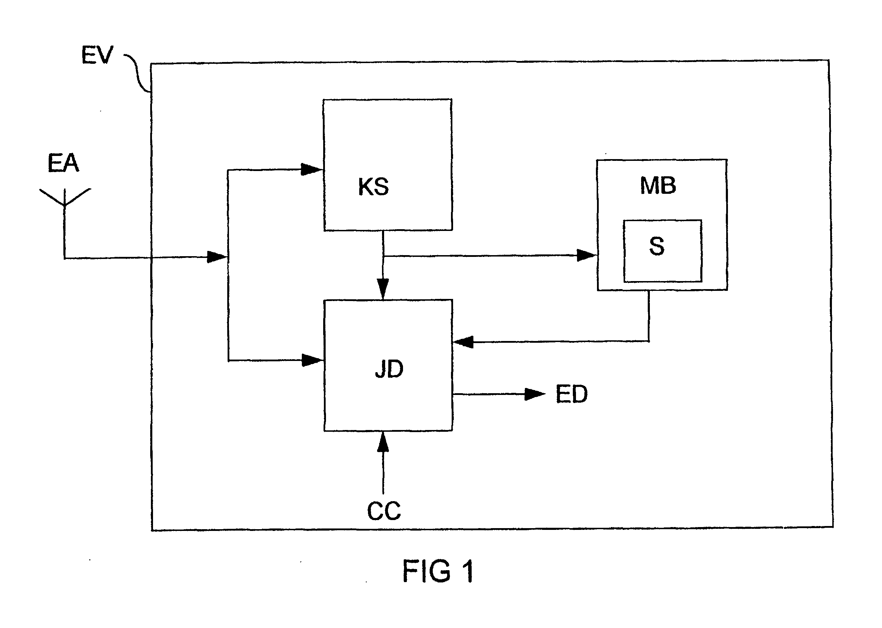

In FIG 1 ist das Blockschaltbild eines JD-CDMA-Empfängers dargestellt. Es kann sich um eine Empfangsvorrichtung (EV) für die Aufwärts- (Uplink) oder Abwärtsstrecke (Downlink) handeln. Dem Teilnehmer kann ein einzelner CDMA-Code (single code Option) oder mehrere CDMA-Codes (multi code Option) zugeteilt sein. Dem Teilnehmer kann ein Zeitschlitz (single slot) oder mehrere Zeitschlitze (multi slot) zugeteilt sein.

Die Empfangsvorrichtung (EV) sieht eine Empfangsantenne (EA) und einen Kanalschätzer (KS) vor. Der Kanalschätzer (KS) schätzt für jeden empfangenen Burst die Kanalimpulsantworten aller in diesem Zeitschlitz aktiven Teilnehmer. Die Kanalimpulsantworten aller Teilnehmer werden im Metrikbilder (MB) mit den vorher geschätzten Kanalimpulsantworten, die in einem Speicher (MS) festgehalten werden, verglichen. Als Metrik kommt beispielsweise die mittlere quadratische Differenz zwischen den neu und den vorher geschätzten Kanalimpulsantworten in Betracht. Betrachtet man beispielsweise den Zero Forcing Blockentzerrer (ZF-BLE), so wird im Empfänger des JD-CDMA-Systems durch den Metrikbilder (MB) die Anpassung des zeitlichen Abstandes zwischen den Anpassungen des Empfängers an die aktuellen Kanalimpulsantworten durchgeführt, d.h. in der hier beschriebenen speziellen Ausführungsform, daß die Entscheidung getroffen wird, ob im Joint Detector (JD) die oben erläuterten Schritte 1 bis 4 für die Datendetekion durchgeführt werden ( Übertragungseigenschaften der Übertragungskanäle haben sich geändert ), oder ob sie nicht durchgeführt werden ( Übertragungseigenschaften der Übertragungskanäle haben sich nur vernachlässigbar geändert ). Im Joint Detector (JD) werden dann auf der Basis der den unterschiedlichen Teilnehmern zugeordneten CDMA-Codes (CC) die empfangenen Daten (ED) detektiert. Zumindest wesentliche Teile des Kanalschätzers, des Metrikbilders und des Joint Detectors können dabei in vorteilhafter Ausgestaltung durch software-gesteuerte Prozessoren realisiert werden.

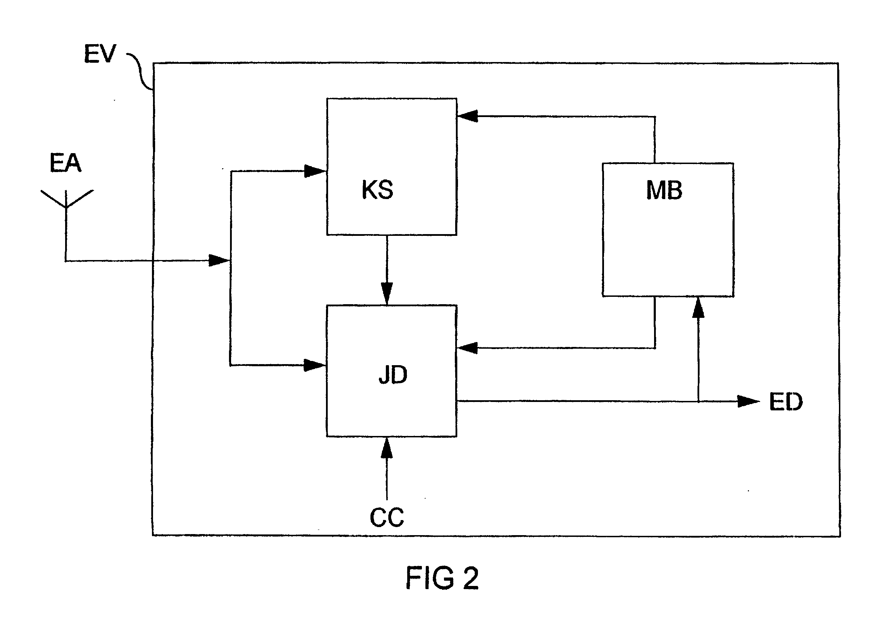

Eine weitere vorteilhafte Ausführungsvariante des erfindungsgemäßen Verfahrens ist in FIG 2 dargestellt. Dabei wird die Anpassung des Empfängers an die aktuellen Kanalimpulsantworten nur dann durchgeführt, wenn die Qualität der übertragenen empfangenen Daten (ED) eine bestimmte Schranke unterschreitet. Diese Ausführungsvariante hat darüber hinaus den Vorteil, daß bei einer vernachlässigbaren Änderung der Übertragungseigenschaften der Übertragungskanäle auch auf die Schätzung der Kanalimpulsantwort verzichtet werden kann, und somit der Aufwand für die Kanalschätzung zusätzlich eingespart werden kann.

Die Entscheidung, ob sich die Übertragungskanäle geändert haben oder nicht, und ob eine Kanalschätzung bzw. eine Anpassung des Empfängers an die aktuellen Kanalimpulsantworten durchgeführt werden muß, kann vorteilhaft auf einer Metrik basieren, die von der Qualität der empfangenen Daten (ED) abhängt. In diesem Fall trifft der Metribilder (MB) erstens die Entscheidung ob die Schritte 1 bis 4 durchgeführt werden müssen, und zweitens, ob eine Kanalschätzung durchgeführt werden soll.

Die Metrik kann mit den wertekontinuierlichen Schätzwerten des Joint Detectors gebildet werden. Eine mögliche Variante ist, daß die Metrik um so größer ist, je größer die Varianz der wertekontinuierlichen Schätzwerte des Joint Detectors ist. Eine weitere Variante, eine Metrik zu bilden, kann durch das Verwenden von Blockcodes realisiert werden. Hat die Prüfsumme bekannter blockcodierter Daten den "richtigen" Wert, haben sich die Übertragungskanäle nur vernachlässigbar geändert. Hat die Prüfsumme bekannter blockcodierter Daten nicht den "richtigen" Wert, muß eine Kanalschätzung und eine Anpassung des Empfängers an die aktuellen Kanalimpulsantworten erfolgen.

Weitere mögliche Detektionsalgorithmen für JD-CDMA sind neben dem erwähnten ZF-BLE:
- Zeroforcing Blockentzerrer mit Decision Feedback (ZF-BDFE),
- Minimum Mean Square Error Blockentzerrer (MMSE-BLE),
- Minimum Mean Square Error Blockentzerrer mit Decision Feedback
Auch bei diesen Detektionsverfahren kann das erfindungsgemäße Verfahren anhand der vorliegenden Beschreibung durch einen Fachmann leicht ausgeführt werden.

Anstelle der Metriken, die ein Maß für die Änderungen der Übertragungseigenschaften der Übertragungskanäle sind, können auch Meßwerte dienen, die eine Aussagekraft über die Übertragungseigenschaften der Übertragungskanäle bzw. die Änderung der Übertragungseigenschaften der Übertragungskanäle aufweisen, wie beispielsweise:
- Geschwindigkeit der der Kommunikationsverbindung zugeordneten Mobilstation
- Dopplerfrequenz
- Änderung der z.B. mit GPS gemessenen Ortskoordinaten

Durch sofwaregesteuerte Prozessoren kann die Anpassung des zeitlichen Abstandes zwischen den Anpassungen des Empfängers an die aktuellen Kanalimpulsantworten sowie die Anpassung des zeitlichen Abstandes zwischen den Kanalschätzungen an diese charakteristischen Meßwerte erfolgen.

Das erfindungsgemäße Verfahren kann durch einen Fachmann mit Hilfe der vorliegenden Beschreibung auch leicht in GSM-Systemen, DS-CDMA-Systemen, Wideband TDMA-Systemen integriert werden und auch bei sogenannten Multi User Detectoren (MUD) und auch für höherratige Datendienste angewendet werden.

Das erfindungsgemäße Verfahren kann dabei ein Teil von Sende/Empfangsverfahren sein, wie sie in herkömmlichen Basisstationen oder Kommunikationsendgeräten durchgeführt werden.

Die der Erfindung entsprechenden Empfangsvorrichtungen können dabei Teile von Sende/Empfangsvorrichtungen wie Basisstationen oder Kommunikationsendgeräten sein.

## Patentansprüche

1. Verfahren zum Empfang von Daten, bei dem die Übertragungeigenschaften der Übertragungskanäle geschätzt werden,
**dadurch gekennzeichnet,**
**daß** der zeitliche Abstand zwischen den Anpassungen des Empfängers an die aktuellen Übertragungeigenschaften der Übertragungskanäle variiert wird und an die Änderungen der Übertragungseigenschaften der entsprechenden Übertragungskanäle angepaßt wird.

2. Verfahren zum Empfang von Daten, bei dem Kanalimpulsantworten geschätzt werden,
**dadurch gekennzeichnet,**
**daß** der zeitliche Abstand zwischen den Anpassungen des Empfängers an die aktuellen Kanalimpulsantworten variiert wird und an die Änderungen der Übertragungseigenschaften der entsprechenden Übertragungskanäle angepaßt wird.

3. Verfahren nach einem der vorhergehenden Ansprüche
**dadurch gekennzeichnet,**
**daß** der zeitliche Abstand zwischen den Anpassungen des Empfängers an die aktuellen Kanalimpulsantworten an die Änderung der Kanalimpulsantworten angepaßt wird.

4. Verfahren nach einem der vorhergehenden Ansprüche,
**dadurch gekennzeichnet,**
**daß** der zeitliche Abstand zwischen den Anpassungen des Empfängers an die aktuellen Kanalimpulsantworten an die Qualität der über die entsprechenden Übertragungskanäle empfangenen Daten angepaßt wird.

5. Verfahren nach einem der vorhergehenden Ansprüche
**dadurch gekennzeichnet,**
**daß** der zeitliche Abstand zwischen den Schätzungen der Kanalimpulsantworten an die Qualität der über die entsprechenden Übertragungskanäle empfangenen Daten angepaßt wird.

6. Verfahren nach einem der vorhergehenden Ansprüche,
**dadurch gekennzeichnet,**
**daß** der zeitliche Abstand zwischen den Anpassungen des Empfängers an die aktuellen Kanalimpulsantworten an für die Übertragungseigenschaften der entsprechenden Übertragungskanäle charakteristische Meßwerte angepaßt wird.

7. Verfahren nach einem der vorhergehenden Ansprüche
**dadurch gekennzeichnet,**
**daß** der zeitliche Abstand zwischen den Schätzungen der Kanalimpulsantworten an für die Übertragungseigenschaften der entsprechenden Übertragungskanäle charakteristische Meßwerte angepaßt wird.

8. Empfangsvorrichtung mit
a) Mitteln zur Kanalschätzung
b) Mitteln zur Anpassung der Empfangsvorrichtung an die aktuellen Kanalimpulsantworten
c) Mitteln zur Anpassung des zeitlichen Abstandes zwischen den Anpassungen der Empfangsvorrichtung an die aktuellen Kanalimpulsantworten an die Änderungen der Übertragungseigenschaften der entsprechenden Übertragungskanäle.

9. Empfangsvorrichtung nach Anspruch 8 mit
a) Mitteln zur Ermittlung der Qualität der empfangenen Daten
b) Mitteln zur Anpassung des zeitlichen Abstandes zwischen den Anpassungen der Empfangsvorrichtung an die aktuellen Kanalimpulsantworten an die Qualität der empfangenen Daten.

10. Empfangsvorrichtung nach Anspruch 9 mit
Mitteln zur Anpassung des zeitlichen Abstandes zwischen den Schätzungen der Kanalimpulsantworten an die Qualität der empfangenen Daten.

11. Empfangsvorrichtung nach einem der Ansprüche 8 bis 10 mit
a) Mitteln zur Ermittlung von für die Übertragungseigenschaften des Übertragungskanals charakteristischen Meßwerten
b) Mitteln zur Anpassung des zeitlichen Abstandes zwischen den Anpassungen der Empfangsvorrichtung an für die Übertragungseigenschaften des Übertragungskanals charakteristische Meßwerte.

12. Empfangsvorrichtung nach Anspruch 11 mit
Mitteln zur Anpassung des zeitlichen Abstandes zwischen den Schätzungen der Kanalimpulsantworten an für die Übertragungseigenschaften des Übertragungskanals charakteristische Meßwerte.

## Claims

1. Method for receiving data in which the transmission properties of the transmission channels are estimated,
**characterized**
**in that** the time interval between the adaptations of the receiver to the present transmission properties of the transmission channels is varied and is adapted to the changes in the transmission properties of the corresponding transmission channels.

2. Method for receiving data in which channel impulse responses are estimated,
**characterized**
**in that** the time interval between the adaptations of the receiver to the present channel impulse responses is varied and is adapted to the changes in the transmission properties of the corresponding transmission channels.

3. Method according to one of the preceding claims,
**characterized**
**in that** the time interval between the adaptations of the receiver to the present channel impulse responses is adapted to the change in the channel impulse responses.

4. Method according to one of the preceding claims,
**characterized**
**in that** the time interval between the adaptations of the receiver to the present channel impulse responses is adapted to the quality of the data received via the corresponding transmission channels.

5. Method according to one of the preceding claims,
**characterized**
**in that** the time interval between the estimations of the channel impulse responses is adapted to the quality of the data received via the corresponding transmission channels.

6. Method according to one of the preceding claims,
**characterized**
**in that** the time interval between the adaptations of the receiver to the present channel impulse responses is adapted to measured values which are characteristic of the transmission properties of the corresponding transmission channels.

7. Method according to one of the preceding claims,
**characterized**
**in that** the time interval between the estimations of the channel impulse responses is adapted to measured values which are characteristic of the transmission properties of the corresponding transmission channels.

8. Receiving device having
a) means for channel estimation
b) means for adapting the receiving device to the present channel impulse responses
c) means for adapting the time interval between the adaptations of the receiving device to the present channel impulse responses to the changes in the transmission properties of the corresponding transmission channels.

9. Receiving device according to Claim 8, having
a) means for determining the quality of the received data
b) means for adapting the time interval between the adaptations of the receiving device to the present channel impulse responses to the quality of the received data.

10. Receiving device according to Claim 9, having means for adapting the time interval between the estimations of the channel impulse responses to the quality of the received data.

11. Receiving device according to one of Claims 8 to 10, having
a) means for determining measured values which are characteristic of the transmission properties of the transmission channel
b) means for adapting the time interval between the adaptations of the receiving device to measured values which are characteristic of the transmission properties of the transmission channel.

12. Receiving device according to Claim 11, having means for adapting the time interval between the estimations of the channel impulse responses to measured values which are characteristic of the transmission properties of the transmission channel.

## Revendications

1. Procédé de réception de données, dans lequel les propriétés de transmission des canaux de transmission sont évaluées, **caractérisé en ce que** l'intervalle temporel entre les adaptations du récepteur aux propriétés de transmission actuelles des canaux de transmission est varié, et qu'il est adapté aux modifications des propriétés de transmission des canaux de transmission correspondants.

2. Procédé pour la réception de données, dans lequel les réponses impulsionnelles du canal sont évaluées, **caractérisé en ce que** l'intervalle temporel entre les adaptations du récepteur aux réponses actuelles impulsionnelles de canal est varié, et qu'il est adapté aux modifications des propriétés de transmission des canaux de transmission correspondants.

3. Procédé selon l'une quelconque des revendications précédentes, **caractérisé en ce que** l'intervalle temporel entre les adaptations du récepteur aux réponses actuelles impulsionnelles de canal est adapté à la modification des réponses d'impulsion de canal.

4. Procédé selon l'une quelconque des revendications précédentes, **caractérisé en ce que** l'intervalle temporel entre les adaptations du récepteur aux réponses actuelles impulsionnelles de canal est adapté à la qualité des données reçues à l'aide des canaux de transmission correspondants.

5. Procédé selon l'une quelconque des revendications précédentes, **caractérisé en ce que** l'intervalle temporel entre les évaluations des réponses impulsionnelles de canal est adapté à la qualité des données reçues à l'aide des canaux de transmission correspondants.

6. Procédé selon l'une quelconque des revendications précédentes, **caractérisé en ce que** l'intervalle temporel entre les adaptations du récepteur aux réponses actuelles impulsionnelles de canal est adapté aux valeurs mesurées caractéristiques pour les propriétés de transmission des canaux de transmission correspondants.

7. Procédé selon l'une quelconque des revendications précédentes, **caractérisé en ce que** l'intervalle temporel entre les évaluations des réponses impulsionnelles de canal est adapté aux valeurs mesurées caractéristiques pour les propriétés de transmission des canaux de transmission correspondants.

8. Dispositif de réception avec
a) des moyens pour estimer les canaux
b) des moyens pour adapter le dispositif de réception aux réponses actuelles impulsionnelles de canal
c) des moyens pour adapter l'intervalle temporel entre les adaptations du dispositif de réception aux réponses actuelles impulsionnelles de canal, aux modifications des propriétés de transmission des canaux de transmission correspondants.

9. Dispositif de réception selon la revendication 8 avec
a) des moyens pour déterminer la qualité des données reçues
b) des moyens pour adapter l'intervalle temporel entre les adaptations du dispositif de réception aux réponses actuelles impulsionnelles de canal, à la qualité des données reçues.

10. Dispositif de réception selon la revendication 9 avec des moyens pour adapter l'intervalle temporel entre les estimations des réponses impulsionnelles de canal à la qualité des données reçues.

11. Dispositif de réception selon l'une quelconque des revendications 8 à 10 avec
a) des moyens pour déterminer les valeurs mesurées caractéristiques pour les propriétés de transmission du canal de transmission
b) des moyens pour adapter l'intervalle temporel entre les adaptations du dispositif de réception aux valeurs mesurées caractéristiques pour les propriétés de transmission du canal de transmission.

12. Dispositif de réception selon la revendication 11 avec des moyens pour adapter l'intervalle temporel entre les estimations des réponses d'impulsion de canal aux valeurs mesurées caractéristiques pour les propriétés de transmission du canal de transmission.
